# EUROPÄISCHE PATENTSCHRIFT

(11) **EP 1 456 032 B1**
(45) Veröffentlichungstag und Bekanntmachung des Hinweises auf die Patenterteilung: **30.04.2008**
(21) Anmeldenummer: 01274982.6
(22) Anmeldetag: 19.12.2001
(51) Int. Cl.: B41F 13/08, F16C 13/00

(54) **DRUCKZYLINDER IN FORM EINES HOHLZYLINDERS AUS METALL**
PRESSURE CYLINDER IN THE FORM OF A HOLLOW CYLINDER MADE OF METAL
CYLINDRE DE PRESSION SOUS FORME DE CYLINDRE CREUX METALLIQUE

(43) Veröffentlichungstag der Anmeldung: 15.09.2004
(73) Patentinhaber: GALLUS FERD. RÜESCH AG, 9016 St. Gallen (CH)
(72) Erfinder: FÄH, Werner, CH-9434 (AU)
(74) Vertreter: Szymanowski, Carsten
(86) Internationale Anmeldenummer: PCT/CH2001/000728
(87) Internationale Veröffentlichungsnummer: WO 2003/051632

(56) Entgegenhaltungen:
- EP-A- 0 523 367
- DE-A- 10 008 218
- DE-A- 19 613 145
- DE-C- 212 175
- US-A- 1 802 038
- US-A- 4 917 013
- US-A- 5 451 198

## Beschreibung

Die vorliegende Erfindung betrifft einen Druckzylinder in Form eines Hohlzylinders aus Metall, insbesondere aus Aluminium, für Druckmaschinen, mit über seine Länge im wesentlichen konstanter Wanddicke.

Druckzylinder der vorstehenden Art sind selbstverständlich längst bekannt. Zum Drucken von unterschiedlichen Formatlängen sind dabei unterschiedliche Zylinderdurchmesser gefragt, was wiederum zu unterschiedlichen Massen bzw. Gewichten der Zylinder führt. Aus festigkeitstechnischen Gründen lassen sich diese Unterschiede nicht durch Reduktion der Wanddicken des Hohlzylinders ausgleichen. Einerseits ist es wichtig, das Gewicht der Druckzylinder möglichst gering zu halten, um dem Drucker das Handling zu erleichtern, anderseits sollten über den ganzen Bereich der zur Anwendung gelangenden Druckzylinderdurchmesser möglichst geringe Massenunterschiede vorhanden sein, um die Rahmenbedingungen für die Antriebsregelung möglichst konstant zu halten.

Aus dem Dokument DE 196 13 145 A1 ist eine Hülse für Druckwalzen, beispielsweise für Rasterwalzen, mit über ihre Länge konstanter Wanddicke bekannt, bei der ein Mantelrohr aus Aluminium mit inneren kragenförmigen Stegen auf ein Innenrohr aufgeschrumpft ist. Die Stege trennen zwischen Mantelrohr und Innenrohr liegende Hohlräume und sind mit Durchgangsbohrungen versehen, so dass bei äußerer Beschichtung des Mantelrohres, beispielsweise mit einer gravierbaren Schicht, die entstehende Wärme gut abgeführt werden kann. Gleichzeitig ist die beschriebene Hülse leichtgewichtig und gegen thermische, chemische und mechanische Belastungen widerstandsfähig.

Im Dokument US 1,802,038 wird ein Druckzylinder einer Druckmaschine beschrieben, der mehrere auf einer Welle gegeneinander in Umfangsrichtung verdrehbaren Zylindersegmenten aufweist. Jedes der Zylindersegmente hat in Wellenrichtung die Breite einer Druckseite und in Umfangsrichtung die Länge zweier Druckseiten und kann auf der Welle in einer gewünschten Winkelorientierung festgesetzt werden, so dass die relative Umfangslage von Druckformen auf verschiedenen Zylindersegmenten zueinander einstellbar ist. Jedes der Zylindersegmente ist aus einem Stück gefertigt und hat die Form eines Hohlzylinders mit doppelt-H-förmigem Querschnitt: Durch eine zentrale Öffnung verläuft die Welle, die von einem inneren Zylinderteil umgeben ist. Das äußere Zylinderteil stützt sich mittels eines Steges auf dem inneren Zylinderteil ab, so dass zwei zwischen innerem und äußerem Zylinderteil liegende Hohlräume gebildet sind. Die zwei Hohlräume sind durch kreisförmige Öffnungen im Steg miteinander verbunden.

Aufgabe der vorliegenden Erfindung war es somit, eine Druckzylinderkonstruktion zu schaffen, welche bei vertretbarem Aufwand den kontroversen Anforderungen Rechnung trägt.

Diese Aufgabe wurde nun bei einem Druckzylinder der eingangs definierten Art auf überraschend einfache Weise erfindungsgemäß durch dessen Aufbau gemäß den Merkmalen des kennzeichnenden Teils von Anspruch 1 gelöst.

Besonders vorteilhafte Ausführungsformen sind in den abhängigen Ansprüchen definiert.

Obwohl der Zylindermantel (bei Zylindern mit unterschiedlichen Durchmessern) mit Längsausnehmungen, wie Längsbohrungen, versehen ist, wird dabei die Festigkeit der Zylinder nicht nachteilig beeinträchtigt.

Die Erfindung ermöglicht den Bau von Druckzylindern mit unterschiedlichen Aussendurchmessern (bei gleichen Innendurchmessern im Hinblick auf das Einsetzen in der Druckmaschine), welche bei gleicher Länge im wesentlichen die gleiche Masse aufweisen.

Die Erfindung wird nachstehend anhand der Zeichnung noch etwas näher erläutert. Es zeigt:
- Fig. 1: einen Längsschnitt durch einen Druckzylinder, und
- Fig. 2: verschiedene mögliche Lochbilder bei erfindungsgemässen Druckzylindern.

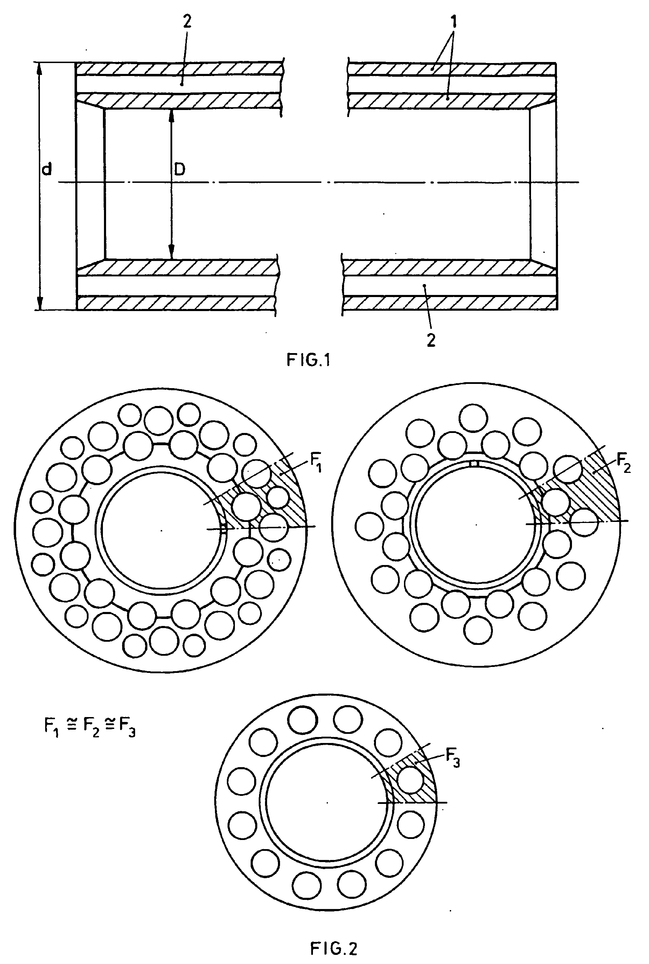

Fig. 1 der Zeichnung zeigt einen Längsschnitt durch einen Druckzylinder 1 aus Aluminium, mit einem standardisierten Innendurchmesser D und einem Aussendurchmesser d, welcher je nach der zu bedruckenden Formatlänge variieren kann.

Bei einer Zylinderlänge von z.B. 350 mm und einem Innendurchmesser D von 78 mm, kann der Aussendurchmesser z.B. Bereiche von 92 - 100, 100 - 120, 120 - 140, 140 - 160, 160 - 180 und 180 - 200 mm umfassen.

Um nun das Gewicht bzw. die Masse des Druckzylinders 1 pro Längeneinheit bei gleichem Innendurchmesser, aber variablem Aussendurchmesser möglichst konstant zu halten, sind über den Umfang regelmässig verteilte, durchgehende Längsausnehmungen, in der Regel Längsbohrungen 2 vorgesehen. Die erforderliche Festigkeit des Druckzylinders wird damit nicht beeinträchtigt.

Die Anordnung der Längsausnehmungen 2 erfolgt, wie Fig. 2 zeigt, auf einem oder mehreren Durchmessern derart, dass der Zylinder unwuchtfrei bleibt. Dies wird dadurch erreicht, dass die Längsausnehmungen auf jedem Durchmesser gleiche gegenseitige Winkelabstände aufweisen und ein konstanter Querschnitt eingehalten wird.

Angestrebt wird eine Verteilung der Längsausnehmungen, damit bei gleichem Innendurchmesser des Zylinders, aber unterschiedlichen Aussendurchmessern des Zylinders dessen Gesamtmasse möglichst gleich bleibt, was durch unterschiedliche Anzahl und/oder Querschnitte der Ausnehmungen erreicht wird (auch Anordnung auf mehreren Durchmessern).

Dadurch wird das Gewicht der Druckzylinder möglichst gering gehalten (Erleichterung des Handlings) und die Masse möglichst konstant gehalten, um die Rahmenbedingungen für die Antriebsregler möglichst konstant zu halten.

## Patentansprüche

1. Druckzylinder (1) in Form eines Hohlzylinders aus Metall für Druckmaschinen, mit einer Zylinderwand (2) mit über die Länge des Druckzylinders (1) im wesentlichen konstanter Wanddicke,
**dadurch gekennzeichnet,**
**dass** in der Zylinderwand (2) auf mindestens einem vorbestimmten Durchmesser eine Vielzahl von parallel zur Zylinderachse verlaufenden, durchgehenden
Längsausnehmungen, welche das Gewicht gering halten, vorgesehen sind, von denen jede über die Länge des Druckzylinders (1) einen konstanten Querschnitt aufweist, und die Gesamtheit der durchgehenden Längsausnehmungen so in der Zylinderwand (2) verteilt angeordnet ist, dass der Druckzylinder (1) unwuchtfrei ist.

2. Druckzylinder (1) nach Anspruch 1,
**dadurch gekennzeichnet,**
**dass** der Druckzylinder (1) aus Aluminium ist.

3. Druckzylinder (1) nach Anspruch 1 oder 2, mit vorbestimmten Innendurchmesser (D),
**dadurch gekennzeichnet,**
**dass** die Längsausnehmungen derart dimensioniert sind und in der Zylinderwand (2) verteilt angeordnet sind, dass unabhängig vom Außendurchmesser (d) des Druckzylinders (1) die Masse des Druckzylinders (1) im wesentlichen gleich ist.

4. Druckzylinder (1) nach Anspruch 1, 2 oder 3,
**dadurch gekennzeichnet,**
**dass** Längsausnehmungen auf verschiedenen Durchmessern vorgesehen sind und die Ausnehmungen achssymmetrisch in Durchmesserebenen mit untereinander gleichen Winkelabständen liegen.

5. Druckzylinder (1) nach Anspruch 4,
**dadurch gekennzeichnet,**
**dass** die auf einem bestimmten Durchmesser liegenden Längsausnehmungen den gleichen Querschnitt aufweisen.

6. Druckzylinder (1) nach einem der Ansprüche 1 bis 5,
**dadurch gekennzeichnet,**
**dass** die Längsausnehmungen einen kreisförmigen Querschnitt aufweisen.

7. Druckzylinder (1) nach Anspruch 6,
**dadurch gekennzeichnet,**
**dass** die Längsausnehmungen Bohrungen sind.

## Claims

1. Printing cylinder (1) in the shape of a hollow cylinder made of metal for printing presses, including a cylinder wall (2) having an essentially constant wall thickness along the length of the printing cylinder (1),
**characterized in**
**that** a plurality of longitudinal end-to-end openings that extend parallel to the axis of the cylinder are provided at at least one predetermined diameter in the cylinder wall (2) to keep the weight low, each of the openings having a constant cross section over the length of the printing cylinder (1), and the total of the longitudinal end-to-end openings being distributed in the cylinder wall (2) in such a way that the printing cylinder (1) is without imbalance.

2. Printing cylinder according to Claim 1,
**characterized in**
**that** the printing cylinder (1) is made of aluminium.

3. Printing cylinder (1) according to Claim 1 or 2, having a predetermined inner diameter (D),
**characterized in**
**that** the longitudinal openings are dimensioned and distributed in the cylinder wall (2) in such a way that the mass of the printing cylinder (1) is essentially the same independently of the outer diameter (d) of the printing cylinder (1).

4. Printing cylinder (1) according to Claim 1, 2, or 3,
**characterized in**
**that** longitudinal openings are provided at various diameters, and
**that** the openings are positioned to be axially symmetric in diametric planes and with identical angular spacings relative to each other.

5. Printing cylinder (1) according to Claim 4,
**characterized in**
**that** the longitudinal openings that are on a specific diameter have the same cross section.

6. Printing cylinder (1) according to any one of Claims 1 to 5,
**characterized in**
**that** the longitudinal openings have a circular cross section.

7. Printing cylinder (1) according to Claim 6,
**characterized in**
**that** the longitudinal openings are bores.

## Revendications

1. Cylindre d'impression (1) sous forme d'un cylindre creux en métal pour des presses à imprimer, comportant une paroi de cylindre (2) dotée d'une épaisseur de paroi essentiellement constante sur la longueur du cylindre d'impression (1), **caractérisé en ce que** dans la paroi de cylindre (2) sur au moins un diamètre prédéterminé est prévue une multitude d'évidements longitudinaux traversant, s'étendant parallèlement à l'axe de cylindre, qui minimisent le poids, parmi lesquels chacun présente une coupe transversale constante sur la longueur du cylindre d'impression (1), et la totalité des évidements longitudinaux traversants est disposée de manière répartie dans la paroi de cylindre (2) de telle sorte que le cylindre d'impression (1) soit exempt de défaut d'équilibrage.

2. Cylindre d'impression (1) selon la revendication 1, **caractérisé en ce que** le cylindre d'impression (1) est en aluminium.

3. Cylindre d'impression (1) selon la revendication 1 ou 2, avec un diamètre interne prédéterminé (D), **caractérisé en ce que** les évidements longitudinaux sont dimensionnés de telle sorte et sont disposés de manière répartie dans la paroi de cylindre (2) qu'indépendamment du diamètre externe (d) du cylindre d'impression (1), la masse du cylindre d'impression (1) soit essentiellement identique.

4. Cylindre d'impression (1) selon la revendication 1, 2 ou 3, **caractérisé en ce que** des évidements longitudinaux sont prévus sur différents diamètres et les évidements se trouvent de manière symétrique par rapport à une droite dans des plans de diamètres, dans lesquels ils présentent les mêmes écarts angulaires les uns par rapport aux autres.

5. Cylindre d'impression (1) selon la revendication 4, **caractérisé en ce que** les évidements longitudinaux se trouvant sur un certain diamètre présentent la même section.

6. Cylindre d'impression (1) selon l'une quelconque des revendications 1 à 5, **caractérisé en ce que** les évidements longitudinaux présentent une section circulaire.

7. Cylindre d'impression (1) selon la revendication 6, **caractérisé en ce que** les évidements longitudinaux sont des perçages.
